# FASCICULE DE BREVET EUROPEEN

(11) **EP 0 441 703 B1**
(45) Date de publication et mention de la délivrance du brevet: **15.12.1993**
(21) Numéro de dépôt: 91400284.5
(22) Date de dépôt: 06.02.1991
(51) Int. Cl.: F16L 59/16, F16L 59/02, F02K 9/84, B64G 1/58

(54) **Dispositif de protection thermique flexible et perméable à la pression**
Flexibler und druckdurchlässiger Wärmeschutz
Flexible and pressure transmitting thermal protection device

(30) Priorité: 09.02.1990 FR 9001556
(43) Date de publication de la demande: 14.08.1991
(73) Titulaire: AEROSPATIALE Société Nationale Industrielle, 75781 Paris Cédex 16 (FR)
(72) Inventeur: Heraud, Joel, F-33160 Saint Aubin du Médoc (FR)
(74) Mandataire: Phélip, Bruno

(56) Documents cités:
- EP-A- 0 018 300
- FR-A- 1 333 603
- FR-A- 2 402 634
- US-A- 3 203 849
- US-A- 3 346 186
- US-A- 3 933 310
- US-A- 4 324 167
- US-A- 4 391 865
- US-A- 4 426 038
- NASA TECH BRIEFS. mars 1988, WASHINGTON US page 205 Sawko-Goldstein:"Tailorable Advanced Blanket Insulation"

## Description

L'invention est relative à des dispositifs de protection thermique destinés à des zones devant subir pendant un temps relativement court un flux thermique relativement élevé ainsi qu'une brusque variation de pression. L'invention concerne également des matériaux permettant la réalisation de ces dispositifs.

L'invention est notamment applicable à la protection thermique d'éléments soumis aux flux thermiques émis par des générateurs de gaz chauds, et plus particulièrement à la protection thermique de culot de propulseur de fusée ou de missile. Une telle protection permet de protéger les équipements électriques, mécaniques ou autres, situés dans les zones arrières des propulseurs, des flux thermiques émis par les tuyères, lors de la mise à feu et/ou du lancement des missiles ou des fusées et/ou de la séparation de deux de leurs étages.

On sait que de telles tuyères peuvent être fixes ou présenter une déformabilité très faible mais que, pour certaines applications, nécessitant par exemple des tuyères orientables, leurs mouvements peuvent être relativement importants. Une tuyère présente en général une forme sensiblement tronconique. Au repos, la tuyère est dans une position telle que son axe est sensiblement parallèle à l'axe du propulseur. Les mouvements de la tuyère consistent principalement en une inclinaison de son axe par rapport à l'axe du propulseur. La tuyère peut également se déformer légèrement sous l'effet des gaz chauds qui y circulent. L'invention concerne une protection thermique qui est utilisable quelle que soit l'ampleur des déformations ou déplacements de la tuyère.

On sait de plus qu'une fusée, comme un missile, est susceptible d'être embarquée à bord d'un véhicule aérien, marin ou sous-marin. Dans de tels véhicules, l'espace disponible est mesuré et on souhaite disposer du maximum d'éléments embarqués dans le minimum d'espace, sans porter atteinte à leur intégrité et sans pour autant nuire à leur efficacité. Il est donc intéressant d'avoir un engin embarqué, fusée ou missile, particulièrement peu encombrant en longueur tout en étant capable d'accomplir la mission envisagée, avec des performances accrues, pour la même longueur hors-tout de l'engin en phase d'activité. Ce résultat peut être obtenu en équipant le propulseur de l'engin embarqué d'une tuyère comprenant un divergent déployable. Le divergent est déployé après l'allumage du propulseur lorsque l'engin est en vol libre et n'est plus soumis à des limitations de longueur, afin de contribuer à accroître le rapport de détente des gaz dans la tuyère et donc à améliorer le rendement de propulsion.

On peut ainsi se référer au brevet français n° 2 422 831 qui est relatif à une tuyère de propulseur à divergent déployable, le divergent étant constitué par une succession d'anneaux rigides reliés entre eux et au corps de tuyère par des anneaux souples. Dans la position repliée du divergent, ces anneaux souples et rigides sont juxtaposés les uns autour des autres et autour du corps de tuyère suivant un profil en accordéon. Dans la position déployée du divergent, ils sont alignés les uns à la suite des autres suivant le profil désiré pour le divergent en configuration d'activité.

On peut également se référer au brevet français n° 2 457 390 qui est également relatif à un divergent déployable de tuyère pour propulseur de fusée. Ce divergent comprend un ensemble de panneaux individuels élémentaires en matériau réfractaire articulés entre eux et par rapport à une partie amont fixe de divergent voisine du col de la tuyère. Les panneaux articulés sont répartis de manière à définir au moins deux couronnes ou troncs de cône adjacents successifs et à pouvoir être placés dans une première position de repli et dans une deuxième position déployée.

L'invention est plus précisément relative à une protection thermique susceptible d'être réalisée aussi bien pour des tuyères réalisées en une seule pièce que pour des tuyères au moins partiellement déployables ou comportant un divergent au moins partiellement déployable.

De nombreux dispositifs de protection thermique sont déjà connus, certains étant destinés plus particulièrement aux éléments placés à l'arrière des propulseurs. Ils peuvent consister en une protection individuelle de chaque élément que l'on souhaite protéger des flux thermiques émanant de la tuyère.

Ainsi, chaque élément de structure, par exemple la jupe ou le fond du propulseur, ainsi que chaque équipement placé dans la zone arrière du propulseur peut être doté d'une coque rigide isolante le protégeant du flux thermique.

Le brevet FR-2 489 812 décrit un procédé de fabrication de pièces en forme capables de supporter des chocs thermiques relativement importants ainsi que des températures élevées, de l'ordre de 1600°C. Ces pièces sont réalisées à partir d'un substrat formé de fibres minérales rigidifiées par au moins un liant minéral et éventuellement un liant organique, le substrat étant réalisé par la technique du moulage par aspiration et l'ensemble ayant subi un traitement de renforcement par une résine. Les pièces en forme obtenues résistent au délaminage et à l'éclatement sous l'effet d'une surpression ou d'une dépression gazeuse et présentent de plus une bonne tenue mécanique réelle et une excellente usinabilité.

Cette technique de protection individuelle de chaque élément de structure et de chaque équipement présente de nombreux inconvénients.

Tout d'abord, elle impose l'utilisation d'une surface et donc d'une masse de matériau de protection thermique très importantes.

De plus, ces coques ou pièces de protection sont fixées mécaniquement ou par collage sur chaque élément de structure ou chaque équipement. Ceci implique que seules les caractéristiques d'isolation thermique des matériaux composant ces coques ou ces pièces sont utilisées. De plus, le collage des éléments de protection thermique sur les équipements entraîne de nombreuses difficultés lors de la maintenance de ceux-ci. En effet, après le démontage des équipements, il faut notamment procéder à la dépose des protections et au décapage des surfaces de collage.

Si la complexité de la réalisation des pièces de protection est fonction de la technique utilisée, il reste qu'un outillage spécifique est nécessaire pour la réalisation de chaque pièce de protection destinée à un élément de structure ou à un équipement particulier. Ainsi, le procédé décrit dans le brevet FR-2 489 812 impose la réalisation préalable, pour chaque pièce de protection particulière, d'un moule d'aspiration destiné à former cette pièce.

On constate enfin que ces techniques de protection thermique individuelles imposent de nombreuses opérations manuelles, notamment des opérations de moulage, de découpe, d'ajustage ou encore de collage. Ces techniques sont donc relativement coûteuses.

On peut donc alors envisager une protection thermique permettant de protéger globalement une première zone des flux thermiques émanant d'une deuxième zone, laquelle peut être soumise à des variations brusques et importantes de température et de pression.

Ainsi, le brevet US-4,324,167 décrit un dispositif réalisant, entre l'allumage et le lancement d'une fusée, une étanchéité entre le tube de lancement et l'arrière de la fusée. Ce dispositif protège ainsi le tube de lancement des gaz à haute température générés par la fusée dès son allumage. Cette protection comprend un écran support et une protection flexible superposés, placés à la partie inférieure de la fusée. Lors de l'allumage de la fusée, une pression s'exerce contre la protection flexible, laquelle se déforme pour venir en contact de la fusée et former un joint étanche. Lorsque la fusée décolle, elle rompt le joint, les gaz d'échappement s'échappant de la tuyère provoquant alors la déformation de la protection et l'accroissement du flux de gaz à travers celle-ci.

Cette protection thermique est efficace pour protéger le tube de lancement dans lequel est placé un missile ou une fusée des flux thermiques émis par les tuyères. Cependant, cette protection n'a aucun effet sur les équipements placés dans les zones arrière des propulseurs.

On peut cependant envisager d'isoler thermiquement grâce à un écran thermique assurant une protection thermique globale de, soit toute une zone comportant des équipements, soit une fraction de cette zone correspondant à un équipement particulier sensible au flux thermique.

Une protection thermique globale comporte des avantages. En effet, sa réalisation nécessite moins de moule et d'outillage que la technique de protection thermique individuelle. Elle est donc moins onéreuse que cette dernière. De plus, l'accès aux équipements qu'elle protège est plus aisé et leur maintenance en est facilitée. En particulier, les opérations de décapage des équipements pour oter les résidus de colle et de matière isolante, résultant du collage des pièces de protection thermique sur les équipements, sont supprimées. Enfin, la surface et donc la masse des matériaux de protection thermique nécessaires à la réalisation d'une telle protection thermique globale sont beaucoup moins importantes que celles entraînées par la réalisation de pièces de protection thermique individuelle qui seraient nécessaires pour protéger les mêmes équipements. On peut constater que le gain de masse est de 25 à 30 %.

La protection thermique globale telle que décrite dans le brevet US-4,324,167 présente cependant des inconvénients. Ainsi, on constate qu'elle est étanche à la pression. Elle engendre en conséquence des efforts importants sur les structures porteuses auxquelles elle est fixée. Ceci impose de renforcer ces structures porteuses et donc entraîne une augmentation de leur masse en réduisant de ce fait les performances de l'engin sur lequel la protection thermique est réalisée.

On connait des protections thermiques rigides et perméables à la pression. Cependant, celles-ci ne présentent qu'une tenue mécanique relativement faible. On peut se reporter de nouveau au brevet FR-2 489 812 qui décrit des pièces et matériaux de protection thermiques présentant une porosité relativement importante et qui résistent ainsi à l'éclatement sous les effets de surpressions ou de dépressions gazeuses. Cependant, ces pièces ou matériaux ne présentent pas de bonnes caractéristiques mécaniques et nécessitent des structures porteuses telles que des châssis. Ceci entraîne une augmentation de la masse de la protection thermique réalisée, ce qui, comme précédemment, réduit les performances de l'engin sur lequel la protection thermique est montée.

Enfin, de telles protections thermiques sont utilisées pour des tuyères fixes ou présentant une très faible déformabilité, mais ne peuvent l'être pour des tuyères dont les mouvements sont relativement importants.

On peut donc envisager un dispositif rigide de protection thermique d'éléments soumis aux flux thermiques émis par des générateurs de gaz chaud, perméable aux surpressions engendrées par l'allumage des générateurs afin de limiter les efforts sur les structures porteuses, permettant de résister à des flux thermiques élevés et de s'adapter à des déformations importantes de ces générateurs. Dans le cas où le générateur de gaz chauds est constitué par la tuyère d'un propulseur de fusée ou de missile, ce dispositif peut par exemple consister en un écran thermique composé de deux parties autoporteuses et non solidaires, une partie étant fixée à la tuyère et l'autre partie à la jupe du propulseur. Une chicane étant ménagée entre ces deux parties, l'écran est perméable à la pression tout en assurant une protection efficace d'une première zone de l'arrière du propulseur, située entre le culot du propulseur et le dispositif de protection par rapport à une deuxième zone située entre le dispositif de protection et le milieu ambiant.

Cependant, un tel dispositif de protection thermique n'est pas utilisable pour des tuyères comportant un divergent au moins partiellement déployable.

Ce dispositif présente de plus des inconvénients. En effet, chaque partie constitutive de l'écran peut être réalisée en un matériau soit étanche, soit perméable à la pression.

Dans le premier cas, des efforts importants sont exercés sur les structures auxquelles elle est fixée, ce qui nécessite la mise en place de renforts. Dans le deuxième cas, le matériau ne présente pas de tenue mécanique suffisante et il faut prévoir des structures porteuses. On constate donc que, dans les deux cas, la masse du dispositif de protection thermique est nécessairement augmentée, ce qui réduit les performances de l'engin sur lequel il est monté.

L'invention a donc pour object un dispositif de protection thermique :
- perméable aux surpressions engendrées par l'allumage d'une tuyère,
- de masse réduite,
- permettant de résister à des flux thermiques élevés,
- présentant une capacité de stockage compatible avec une tuyère comportant un divergent au moins partiellement déployable et
- pouvant s'adapter à des déplacements et/ou des déformations importantes de la tuyère.

Ce dispositif de protection est plus particulièrement applicable à la protection thermique de culot de propulseur de missile ou de fusée. Il est perméable aux surpressions engendrées par l'allumage de la ou des tuyère(s), résiste à des températures élevées, présente une capacité de stockage compatible avec au moins une tuyère comportant un divergent au moins partiellement déployable et peut s'adapter à des déformations et/ou déplacements importants de la ou des tuyère(s).

L'invention concerne donc un dispositif comprenant une première et une deuxième zones situées entre au moins un premier et un deuxième éléments sensiblement en vis-à-vis et susceptibles de s'écarter l'un de l'autre et de glisser l'un par rapport à l'autre, la deuxième zone pouvant être soumise à des variations relativement brusques et importantes de température et de pression, et un écran thermiquement isolant disposé entre les deux zones et présentant au moins un point d'accrochage sur chacun desdits éléments, caractérisé en ce qu'au moins une partie dudit écran est réalisée en un matériau perméable à la pression et flexible, ledit écran présentant une forme adaptée à celle des premier et deuxième éléments.

Dans une application du dispositif selon l'invention, la deuxième zone est soumise à la température et à la pression de gaz émanant d'un générateur de gaz relativement chauds.

Le premier élément est alors constitué par le générateur de gaz chauds.

Dans une application plus particulière, les zones sont situées à l'arrière du propulseur d'une fusée ou d'un missile.

Le générateur de gaz chauds est alors constitué par le propulseur et la tuyère de la fusée ou du missile tandis que le deuxième élément est constitué par la jupe de la fusée ou du missile.

Dans cette application, la première zone est de plus située entre le culot du propulseur et l'écran tandis que la deuxième zone est de plus située entre l'écran et le milieu ambiant.

Selon une forme préférée de réalisation du dispositif de protection thermique selon l'invention, l'écran est sensiblement annulaire, sa périphérie externe constituant une zone d'accrochage sur la jupe tandis que sa périphérie interne constitue une zone d'accrochage sur la tuyère.

De façon préférée, la partie en matériau flexible est fixée sur la tuyère au niveau de sa périphérie interne.

Selon un premier mode de réalisation du dispositif de projection thermique selon l'invention, l'écran comprend de plus une autre partie dont la périphérie extérieure est fixée sur la jupe.

Dans un premier exemple de réalisation, cette autre partie est constituée d'un matériau thermiquement isolant et rigide.

Dans un deuxième exemple de réalisation, cette autre partie est constituée d'un matériau isolant thermiquement et d'une structure porteuse.

Dans ces deux exemples, le matériau isolant thermiquement est, de préférence, perméable à la pression.

Dans le deuxième exemple de réalisation, la structure porteuse est supportée, de préférence, par un châssis.

De façon préférée, le châssis est composé de bras répartis autour de la tuyère et reliés entre eux par l'intermédiaire d'un cadre supérieur et d'un cadre inférieur, le cadre supérieur étant fixé à la jupe tandis que le cadre inférieur supporte la structure porteuse.

Dans ce deuxième exemple de réalisation, la structure porteuse est constituée par des supports usinés ou moulés ou par un plateau conique en nid d'abeille.

Dans ce cas, le plateau comporte, de préférence, des ouvertures.

Dans ces deux exemples de réalisation, la partie en matériau flexible est, de préférence, fixée au cadre inférieur au niveau de sa périphérie extérieure.

Selon un deuxième mode de réalisation du dispositif de protection thermique selon l'invention, ladite partie en matériau flexible constitue l'ensemble de l'écran et est fixée au niveau de sa périphérie extérieure sur la jupe.

De préférence, la partie en matériau flexible est également fixée sur le cadre inférieur d'un châssis.

Pour faciliter son montage sur la tuyère, l'écran est, de préférence, composé de deux éléments annulaires reliés entre eux lors de leurs montage.

Dans un premier mode de réalisation, ledit matériau perméable à la pression et flexible comprend au moins une couche de feutre thermiquement isolant en fibres réfractaires placée entre au moins deux couches de tissu dont l'une au moins est réalisée en un tissu ignifuge et/ou réfractaire.

Dans un premier exemple de réalisation, les couches de feutre et de tissu sont juxtaposées.

Dans un deuxième exemple de réalisation, les couches de feutre et de tissu sont maintenues entre elles par tout moyen de liaison approprié tel que des coutures, des agrafes ou des points piqués.

De préférence, les moyens de liaison sont disposés selon au moins une direction de façon à obtenir un matelassage.

Les moyens de liaison peuvent notamment être selon deux directions perpendiculaires.

Dans une première forme de réalisation, le tissu est constitué de fibres identiques à celles composant le feutre isolant.

Dans une deuxième forme de réalisation, le tissu est constitué de fibres de nature différente de celle composant le feutre isolant.

Dans un deuxième mode de réalisation, ledit matériau perméable à la pression et flexible peut aussi être constitué d'un tissu ou d'un treillis métallique souple recouvert de fibres ou de tissus réfractaires.

L'invention sera mieux comprise et d'autres buts, avantages et caractéristiques de celle-ci apparaîtront plus clairement à la lecture de la description qui suit de modes particuliers de réalisation faite en relation avec les dessins annexés sur lesquels :
- la figure 1 représente une demi-coupe de la zone arrière du propulseur d'une fusée selon l'axe vertical de la fusée,
- la figure 2 représente une vue en plan d'un exemple de structure porteuse pour le dispositif de protection selon l'invention,
- la figure 3 représente une vue partielle en coupe selon un plan passant par l'axe de la fusée d'un premier exemple de réalisation du dispositif de protection selon l'invention,
- la figure 4 représente une vue partielle en coupe selon un plan passant par l'axe de la fusée d'un deuxième exemple de réalisation du dispositif de protection selon l'invention,
- la figure 5 représente une vue avec coupe partielle du matériau isolant pour le dispositif de protection selon l'invention,
- la figure 6 représente un troisième exemple de réalisation du dispositif de protection selon l'invention et
- la figure 7 représente une vue partielle en coupe selon un plan passant par l'axe de la fusée d'un quatrième exemple de réalisation du dispositif de protection selon l'invention.

Les éléments communs aux différentes figures seront désignés par les mêmes références.

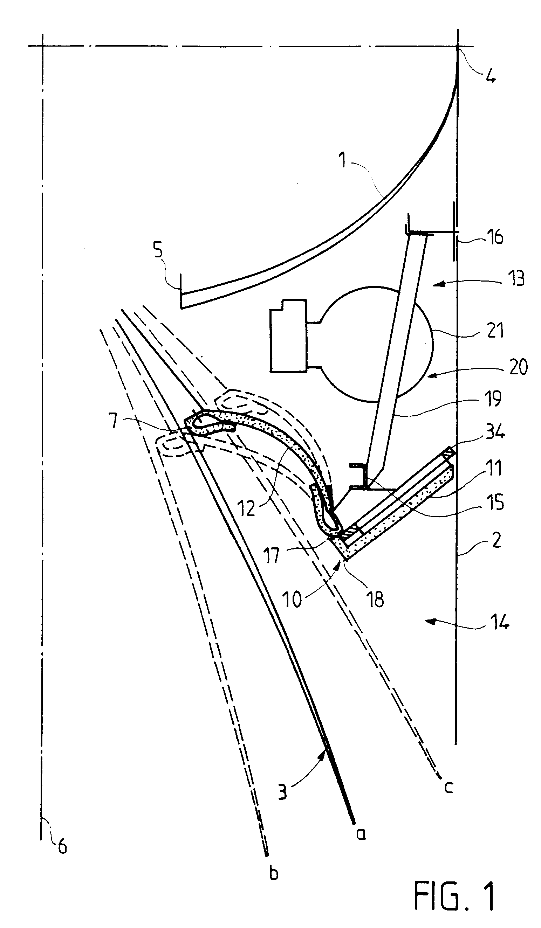

En référence à la figure 1, le culot du propulseur porte la référence 1. Il présente une forme annulaire concave dont la concavité est tournée vers l'intérieur du propulseur. Au niveau de sa périphérie extérieure 4, est fixée l'extrémité supérieure de la jupe 2 qui présente une forme cylindrique. Le culot 1 et la jupe 2 sont des surfaces de révolution ayant pour axe l'axe vertical 6 de la fusée. L'extrémité supérieure de la tuyère 3 est disposée au niveau de la périphérie intérieure 5 du culot 1.

La tuyère 3 présente une forme sensiblement tronconique.

La jupe 2 est fixe, par contre le tuyère est mobile. Ainsi, la figure 1 illustre à titre d'exemple les deux positions extrêmes de la tuyère, référencées b et c.

Dans la position a, représentée en traits pleins, l'axe de la tuyère correspond à l'axe vertical 6 de la fusée. Dans les positions b et c, représentées en pointillés, l'axe de la tuyère fait un angle ± α par rapport à l'axe 6, α étant une valeur déterminée.

Comme on le comprendra par la suite, l'invention est plus particulièrement avantageuse pour des fusées comportant des tuyères mobiles ou des tuyères comportant un divergent au moins partiellement déployable. Elle est cependant tout à fait applicable à des fusées dont les tuyères sont fixes.

On peut noter d'ailleurs que, quelque soit le type de tuyère, sous l'effet des gaz chauds circulant dans la tuyère, celle-ci peut se dilater légèrement.

Entre la tuyère 3 et la jupe 2, sont disposés des équipements électriques ou mécaniques, désignés par la référence 21. En l'absence de tout dispositif de protection, ces équipements sont soumis au flux thermique émis par la tuyère 3, dans laquelle circulent des gaz chauds après l'allumage de la fusée. La température des gaz peut atteindre par exemple 1600°C.

Les équipements ne peuvent subir de telles températures sans dommage.

Le dispositif de protection selon l'invention a donc pour but de s'opposer au flux thermique émis par la tuyère afin de limiter l'élévation de température des équipements et des structures à une valeur acceptable, par exemple comprise entre 70°C et 150°C.

Ce dispositif comprend essentiellement un écran thermique 10 réalisé en une première et une deuxième parties 11 et 12 sensiblement annulaires. La première partie 11 est montée sur la jupe 2 au niveau de sa périphérie extérieure 8 par l'intermédiaire d'un châssis 34 supporté par la jupe 2, tandis que la périphérie intérieure 7 de la deuxième partie 12 est supportée par la tuyère 3.

De plus, la première partie 11, respectivement la deuxième partie 12, est fixée au niveau de sa périphérie intérieure 17, respectivement au niveau de sa périphérie extérieure 18 sur le cadre inférieur 15 d'un châssis 20. Le châssis 20 est composé de plusieurs bras 19 répartis autour de la tuyère 3, reliés entre eux par l'intermédiaire d'un cadre supérieur 16, fixé à la jupe 2 et du cadre inférieur 15.

Le châssis 20 est essentiellement prévu pour porter des équipements, et il peut être également utilisé pour la fixation de l'écran thermique. D'autres moyens de fixation peuvent cependant être prévus.

Dans l'exemple de réalisation illustré par la figure 1, la deuxième partie 12 du dispositif de protection est placée plus près du culot 1 du propulseur que la première partie 11. L'intérêt de cette disposition est détaillée plus loin.

Les deux parties sont réalisées en des matériaux tels qu'elles assurent une isolation thermique efficace d'une première zone 13 de l'arrière du propulseur, située entre le culot 1 du propulseur et le dispositif de protection et comportant les équipements 21 à protéger, par rapport à une deuxième zone 14 située entre le dispositif de protection et le milieu ambiant tout en présentant simultanément une tenue mécanique et une perméabilité aux gaz suffisantes.

En effet, la température des gaz émanant de la tuyère peut atteindre des valeurs élevées, par exemple 1600°C.

De plus, les variations très brusques de la pression dans la deuxième zone 14, du fait des gaz émanant de la tuyère, peuvent être assimilées à des chocs et le transport ainsi que le tir des engins sur lesquels le dispositif de protection thermique peut être embarqué entraînent des vibrations importantes.

Enfin, les variations de pression très brusques, dans la deuxième zone 14, entraînent des efforts d'autant plus importants sur les structures porteuses du dispositif de protection que celui-ci est moins perméable à la pression. Ces efforts rendent nécessaire de prévoir des renforts supplémentaires pour qu'ils soient supportés sans dommage. Ceci entraîne une augmentation de la masse globale du dispositif de protection et réduit donc les performances de l'engin sur lequel celui-ci est monté. Il est donc nécessaire d'utiliser des matériaux relativement perméables à la pression.

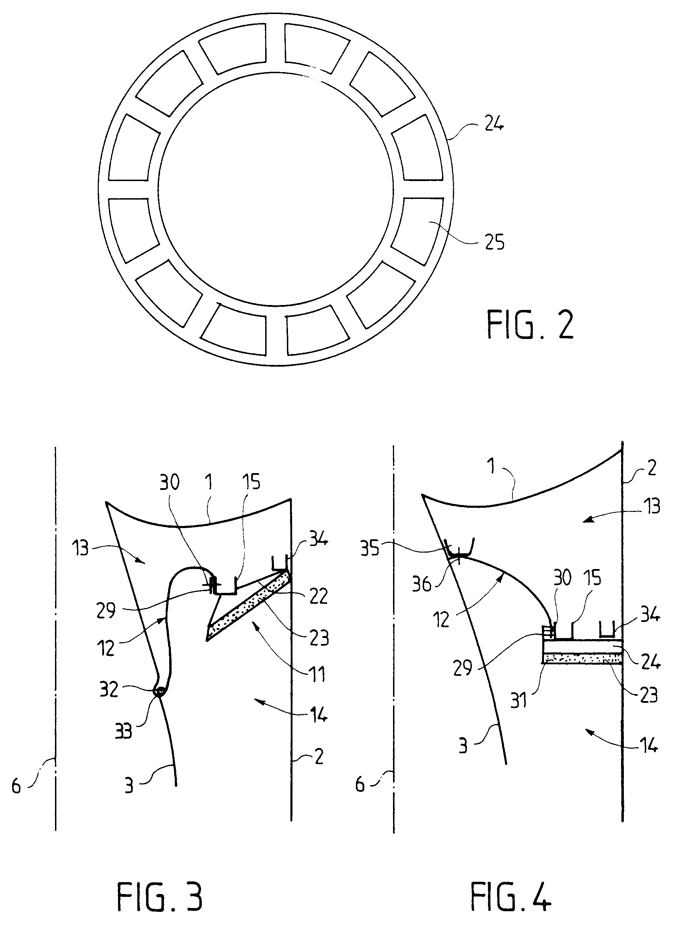

La première partie 11 peut être réalisée en un matériau thermiquement isolant dans le cas où celui-ci est suffisamment rigide. On peut citer, comme exemple non limitatif d'un tel matériau, le matériau commercialisé sous la marque DURESTOS, qui est composé de fibres courtes d'amiante et de résine thermodurcissable. Elle peut être également constituée d'une structure porteuse relativement rigide recouverte d'un matériau thermiquement isolant dont des exemples de réalisation vont maintenant être décrits en référence aux figures 2 à 4.

La structure porteuse de la première partie 11 peut être une structure mécanique classique constituée par des supports 22 usinés ou moulés. Grâce au matériau isolant, dont une couche 23 est placée sur la face des supports 22 située vers le milieu ambiant, la température des supports est limitée. Dans la mesure où elle n'excède pas 150°C, toute liberté est laissée dans le choix des matériaux métalliques dans lesquels les supports sont réalisés.

On peut également envisager de réaliser la structure porteuse en un assemblage ayant une âme en nid d'abeille, éventuellement recouverte de tissu par exemple en carbone haut module (HM), pour accroître la rigidité. Cet assemblage présente l'avantage d'être très léger tout en ayant un moment d'inertie très important. Il est notamment commercialisé par l'Aérospatiale sous la marque NIDA.

Ainsi, la figure 2 illustre un exemple de structure porteuse réalisée en NIDA. Cette structure est réalisée à partir d'un cône plein en NIDA qui peut être usiné de façon à réaliser des ouvertures. L'intérêt des ouvertures sera détaillé dans la suite de la description. Elle se présente alors sous la forme d'un plateau conique 24 muni d'ouvertures 25 relativement importantes. Ce plateau peut être réalisé en deux parties, à partir de deux demi-cônes, pour faciliter son montage autour de la tuyère 3.

Le plateau 24 est également recouvert d'une couche de matériau thermiquement isolant 23 sur sa face située vers le milieu ambiant.

Plusieurs types de matériaux isolants peuvent être utilisés pour recouvrir la structure porteuse de la première partie 11 du dispositif de protection selon l'invention.

Compte tenu de ce qui a été exposé précédemment, on choisit des matériaux perméables à la pression, afin de réduire les efforts exercés sur les structures porteuses et les éléments qui les supportent (châssis).

Les structures porteuses décrites précédemment comportent des évidements : ouvertures 25 dans le plateau 24 pour une structure porteuse réalisée en NIDA ou espaces entre les supports usinés ou moulés 22 pour une structure porteuse mécanique.

Ainsi, si l'on utilise un matériau isolant perméable à la pression, la première partie 11 du dispositif de protection est perméable à la pression.

On peut citer comme matériau isolant perméable à la pression le matériau obtenu par le procédé décrit dans le brevet FR-2 489 812 déjà cité dans l'introduction de la présente demande et inclus ici à titre de référence.

Ce matériau présente un pourcentage de porosités ouvertes très élevé, de l'ordre de 84 %, et un faible pourcentage de fibres, de l'ordre de 10 %. Il offre une résistance aux brusques variations de pression et une protection thermique tout à fait satisfaisantes.

Il est cependant relativement fragile aux contraintes mécaniques et aux chocs et ne peut donc être utilisé qu'en association avec des structures porteuses.

Le matériau est fabriqué, pour cette application, sous forme de plaques dont l'épaisseur est adaptée aux conditions d'utilisation.

Ces plaques sont, soit collées sur les structures porteuses, soit fixées mécaniquement, il est alors nécessaire de protéger les têtes de fixation.

On peut aussi envisager d'intégrer, au moment de la fabrication du matériau isolant et plus particulièrement au moment de l'aspiration des fibres, un implant en forme de cadre et muni de pattes de fixation permettant de lier la structure porteuse au matériau isolant. On comprend que, dans ce cas, les implants sont liés par adhérence aux fibres du matériau isolant.

L'invention n'est pas limitée à l'utilisation de ce matériau isolant particulier.

La deuxième partie 12 est réalisée en un matériau qui est non seulement un bon isolant thermique, perméable aux gaz, mais qui est aussi flexible. Des exemples d'un tel matériau seront détaillés dans la suite de la description.

La largeur de la deuxième partie 12 est choisie de façon à permettre les déformations ou déplacements de la tuyère 3, notamment des déformations dues à des dilatations thermiques et des déplacements angulaires, comme illustré à la figure 1, ou en translation par rapport à la jupe pour des tuyères au moins partiellement déployables ou comportant un divergent au moins partiellement déployable.

On comprend qu'en ce qui concerne les déplacements angulaires de la tuyère, la largeur de la deuxième partie 12 peut être d'autant moins importante qu'elle est plus proche du culot 1 du propulseur. La disposition illustrée aux figures 1 et 4 est donc préférable du point de vue de la masse du dispositif de protection.

Il est cependant envisageable de placer la première partie 11 du dispositif de protection plus près du culot 1 du propulseur que la périphérie interne de la deuxième partie 12, par laquelle cette deuxième partie est fixée à la tuyère 3, comme illustré à la figure 3.

On peut envisager plusieurs types de matériaux pour réaliser la deuxième partie du dispositif.

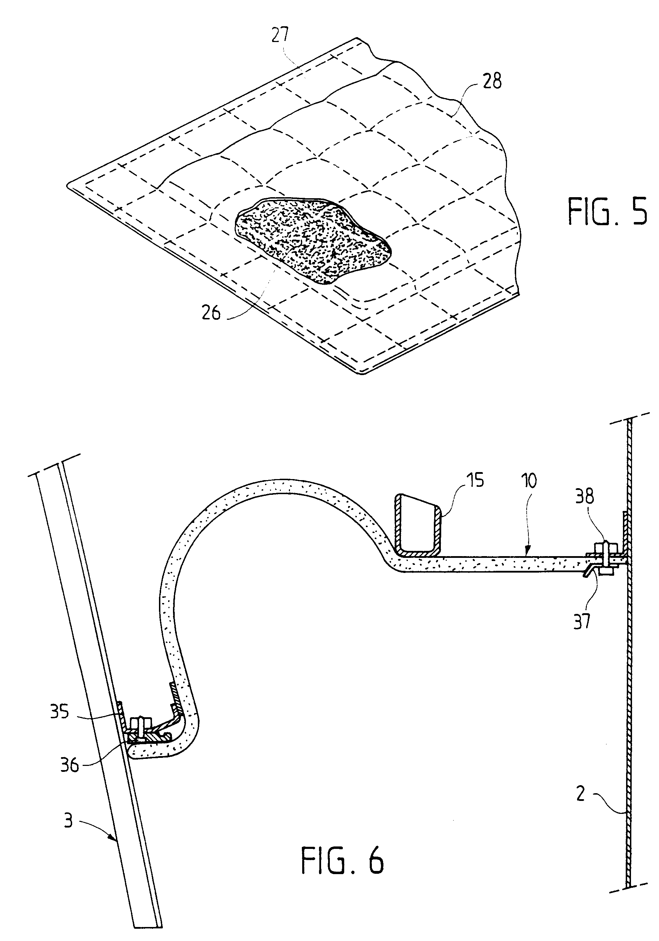

Cependant, le matériau qui va maintenant être décrit en référence à la figure 5 a été spécialement conçu à cet effet et répond de façon tout à fait satisfaisante aux impératifs exposés ci-dessus.

Ce matériau est constitué essentiellement de trois éléments : un feutre thermiquement isolant 26, un tissu 27 ignifuge et réfractaire et éventuellement un fil de liaison réfractaire.

Le feutre isolant 26 présente l'avantage d'être souple et perméable aux gaz.

Le tissu 27 est lui aussi souple et perméable aux gaz avec une tenue mécanique satisfaisante. On peut choisir de plus un tissu constitué de fibres identiques à celles entrant dans la composition du feutre 26.

Le matériau comprend de préférence une couche de feutre 26 entre deux couches de tissu 27. Celles-ci permettent de maintenir le feutre 26 et de conférer ainsi à l'ensemble une tenue mécanique compatible avec les niveaux de sollicitations rencontrés lors de l'utilisation.

On peut bien sûr utiliser plus de deux couches de tissu, mais il est nécessaire de prévoir au moins une couche de tissu de chaque côté du feutre 26.

On peut noter que les couches de tissu 27, situées de part et d'autre du feutre 26, peuvent être ou non de nature identique et qu'elles peuvent ou non être constituées de fibres identiques à celles du feutre 26.

Les couches de tissu et de feutre peuvent être simplement juxtaposées ou encore maintenues en place par tout moyen de liaison approprié tel que par exemple des agrafes, des points piqués, ou encore des coutures disposées selon au moins une direction déterminée de façon à obtenir un matelassage. Ces moyens de liaison, comme les coutures 28, peuvent notamment être disposés selon des directions perpendiculaires, comme illustré à la figure 5.

Ces moyens, comme les coutures 28, assurent la cohésion entre les différentes couches. Du fait qu'ils compartimentent le feutre, ils limitent l'effet des vibrations.

Compte tenu de la température élevée des gaz émanant d'une tuyère, on utilise de préférence des feutres céramiques, comprenant des fibres d'oxyde d'aluminium (Al₂ O₃) et d'alumino silicate (Si O₂) ou des fibres d'oxyde de zircon (Zr O₂), comme ceux commercialisés sous les dénominations Cerachem par la Société John Manville France et sous les dénominations Kerlane 60 ou Zirlane par la Société Kerlane. On constate, après essais thermiques, que ces feutres conservent une souplesse suffisante pour supporter les mouvements de la tuyère lors du fonctionnement du propulseur.

De même, on choisit de préférence des tissus constitués principalement de fils, fibres ou filaments d'oxyde d'aluminium (Al₂ O₃) et d'alumino silicate (Si O₂), comme ceux commercialisés sous la dénomination Nextel par la Société 3M, au moins sur la "face chaude" du matériau isolant, c'est-à-dire la face du matériau isolant placée vers la deuxième zone 14.

On peut utiliser, sur la "face froide" du matériau isolant, face placée vers la première zone 13, des tissus en fibre aramide comme ceux commercialisés sous la dénomination Kevlar, ou encore des tissus en carbone ou des tissus composés de fils métalliques.

Quant aux fils utilisés pour réaliser les coutures 28, on peut envisager d'utiliser des fils Nextel.

On peut aussi envisager d'utiliser, pour réaliser la deuxième partie du dispositif, un matériau constitué d'un tissu ou d'un treillis métallique souple recouvert de fibres ou de tissus réfractaires, par exemple un tissu de verre. Un tel matériau présente l'avantage, par rapport à celui qui vient d'être décrit, d'être moins fragile, notamment lorsque le feutre utilisé dans le matériau précédent est un feutre céramique. Il est cependant moins perméable à la pression que le matériau précédent.

Vont maintenant être décrits de façon plus précise des exemples non limitatifs de modes de liaison de la deuxième partie 12 du dispositif sur la tuyère 3 ainsi que des exemples de liaison des deux parties sur le cadre inférieur 15 du châssis 34.

La liaison entre la première et la deuxième parties 11 et 12 s'effectue au niveau du cadre inférieur 15 et de façon classique, par exemple en pinçant une extrémité de la deuxième partie 12 entre le cadre inférieur 15 et un élément de fixation 29 et en les fixant par tout moyen approprié, par exemple des vis 30. L'élément 29 est de préférence revêtu d'une couche de matériau isolant.

La liaison entre la deuxième partie 12 et la tuyère 3 peut être réalisée par l'intermédiaire d'un câble 32 passant à l'intérieur de l'autre extrémité de la deuxième partie 12, ce câble 32 étant logé à l'intérieur d'une gorge 33 ménagée dans la tuyère 3. Cette disposition est illustrée par la figure 3. Elle peut également être réalisée au moyen d'un système de fixation 35 placé sur la tuyère 3 auquel l'autre extrémité de la deuxième partie 12 est fixée par l'intermédiaire de tout moyen approprié, notament des vis 36. Cette disposition est illustrée par la figure 4.

Le dispositif de protection thermique qui vient d'être décrit est composé d'un écran en deux parties assurant l'une et l'autre une protection thermique de la première zone 13 ainsi qu'un équilibrage des pressions de part et d'autre du dispositif de protection, la première partie 11 étant relativement rigide et la deuxième partie 12 relativement souple. La deuxième partie 12 permet de plus les mouvements de la tuyère.

On peut envisager, comme illustré à la figure 6, de supprimer la première partie 11 relativement rigide, le dispositif de protection selon l'invention étant alors entièrement constitué d'un écran 10 en un matériau flexible, par exemple celui qui a été décrit en référence à la figure 6.

La liaison entre le dispositif de protection et la tuyère 3 est réalisée comme précédemment par l'intermédiaire d'un câble ou d'un système de fixation. C'est ce dernier exemple qui est illustré à la figure 6.

Le dispositif de protection est fixé sur la jupe 2, par exemple par l'intermédiaire d'un élément de fixation 37 relié à la jupe 2, des moyens de fixation tels que des vis 38 étant prévus pour relier le dispositif à l'élément 37, de préférence recouvert de matériau isolant.

Il est également fixé au niveau du cadre inférieur 15 du châssis par tout moyen approprié.

On comprend que ce dispositif présente les mêmes avantages que celui décrit précédemment : protection thermique, perméabilité aux gaz, flexibilité, tout en permettant un gain de masse important. En effet, la partie rigide du dispositif et notamment sa structure porteuse est supprimée. Il permet également de diminuer le nombre de pièces intervenant dans la réalisation du dispositif.

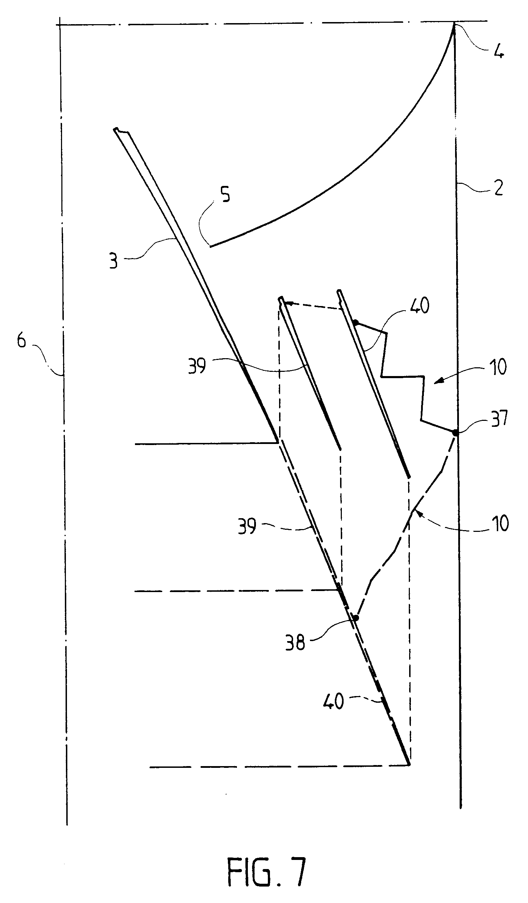

Dans l'exemple de réalisation illustré à la figure 7, le dispositif de protection selon l'invention est, comme sur la figure 6, entièrement constitué d'un écran 10 en un matériau flexible. Il est fixé sur la jupe 2 par des moyens de fixation appropriés 37 et sur la tuyère 3 par des moyens appropriés 38.

Le divergent de la tuyère 3 comporte, dans cet exemple, deux anneaux 39 et 40 articulés entre eux et au corps de tuyère.

Dans la position déployée, représentée en pointillés, les anneaux et le corps de tuyère sont alignés les uns à la suite des autres suivant le profil désiré pour le divergent en configuration d'activité. Le dispositif de protection 10, dans sa position correspondant à la position déployée du divergent, est également représenté en pointillés sur la figure 7.

Dans la position repliée du divergent, représentée en traits pleins, les anneaux 39 et 40 sont juxtaposés l'un autour de l'autre et autour du corps de tuyère selon un profil en accordéon. La position correspondante du dispositif de protection 10 est également représentée en traits pleins sur la figure 7.

Cette figure illustre un autre avantage essentiel du dispositif selon l'invention qui est sa capacité de stockage. Celle-ci permet l'utilisation du dispositif avec une tuyère comportant un divergent au moins partiellement déployable.

On peut noter que le dispositif peut, pour faciliter son montage, être réalisé en deux parties annulaires. Ces deux parties peuvent alors être reliées par différents moyens, notamment un laçage à travers des oeillets, des crochets, des fermetures à glissières ou encore des bandes auto-agrippantes.

Enfin, les signes de référence insérés après les caractéristiques techniques énoncées dans les revendications, ont pour seul but de faciliter la compréhension de ces dernières et ne peuvent avoir en aucun cas pour effet de limiter l'invention aux modes particuliers de réalisation qui viennent d'être décrits.

## Revendications

1. Dispositif comprenant une première et une deuxième zones (13,14) situées entre au moins un premier et un deuxième éléments (2,3) sensiblement en vis-à-vis et susceptibles de s'écarter l'un de l'autre et de glisser l'un par rapport à l'autre, la deuxième zone (14) pouvant être soumise à des variations relativement brusques et importantes de température et de pression, et un écran (10) thermiquement isolant disposé entre les deux zones et présentant au moins un point d'accrochage (8, 7) sur chacun desdits éléments (2, 3), caractérisé en ce qu'au moins une partie (12) dudit écran est réalisée en un matériau perméable à la pression et flexible, ledit écran (10) présentant une forme adaptée à celle des premier et deuxième éléments.

2. Dispositif selon la revendication 1, caractérisé en ce que ladite deuxième zone est soumise à la température et à la pression de gaz émanant d'un générateur de gaz relativement chauds.

3. Dispositif selon la revendication 2, caractérisé en ce que ledit premier élément est constitué par ledit générateur de gaz chauds.

4. Dispositif selon l'une des revendications 1 à 3, caractérisé en ce que lesdites zones (13, 14) sont situées à l'arrière du propulseur d'une fusée ou d'un missile.

5. Dispositif selon la revendication 4,caractérisé en ce que ledit générateur de gaz chauds est constitué par le propulseur et la tuyère (3) de la fusée ou du missile.

6. Dispositif selon l'une des revendications 4 ou 5, caractérisé en ce que ledit deuxième élément est constitué par la jupe (2) de la fusée ou du missile.

7. Dispositif selon l'une des revendications 4 à 6, caractérisé en ce que ladite première zone (13) est de plus située entre le culot (1) du propulseur et l'écran (10).

8. Dispositif selon l'une des revendications 4 à 7, caractérisé en ce que ladite deuxième zone (14) est de plus située entre l'écran (10) et le milieu ambiant.

9. Dispositif selon l'une des revendications 4 à 8, caractérisé en ce que ledit écran (10) est sensiblement annulaire, sa périphérie externe (8) constituant une zone d'accrochage sur la jupe (2) tandis que sa périphérie interne (7) constitue une zone d'accrochage sur la tuyère (3).

10. Dispositif selon l'une des revendications 4 à 9, caractérisé en ce que ladite partie (12) en matériau flexible est fixée sur la tuyère (3) au niveau de sa périphérie interne (7).

11. Dispositif selon l'une des revendications 4 à 10, caractérisé en ce que ledit écran (10) comprend de plus une autre partie (11) dont la périphérie extérieure (8) est fixée sur la jupe (2).

12. Dispositif selon la revendication 11; caractérisé en ce que ladite partie (11) est constituée d'un matériau thermiquement isolant et rigide.

13. Dispositif selon l'une des revendication 11, caractérisé en ce que ladite partie (11) est constituée d'un matériau isolant thermiquement (23) et d'une structure porteuse (22, 24).

14. Dispositif selon l'une des revendications 12 ou 13, caractérisé en ce que ledit matériau isolant thermiquement est perméable à la pression.

15. Dispositif selon l'une des revendications 13 ou 14, caractérisé en ce que la structure porteuse (22, 24) est supportée par un châssis (20).

16. Dispositif selon la revendication 15, caractérisé en ce que ledit châssis (20) est composé de bras (19) répartis autour de la tuyère (3) et reliés entre eux par l'intermédiaire d'un cadre supérieur (16) et d'un cadre inférieur (15), le cadre supérieur étant fixé à la jupe (2) tandis que le cadre inférieur supporte la structure porteuse.

17. Dispositif selon l'une des revendications 13 à 16, caractérisé en ce que la structure porteuse est constituée par des supports (22) usinés ou moulés.

18. Dispositif selon l'une des revendications 13 à 16, caractérisé en ce que la structure porteuse est constituée par un plateau conique (24) en nid d'abeille.

19. Dispositif selon la revendication 18, caractérisé en ce que ledit plateau comporte des ouvertures (25).

20. Dispositif selon l'une des revendications 11 à 19, caractérisé en ce que ladite partie (12) en matériau flexible est fixée au cadre inférieur (15) au niveau de sa périphérie extérieure (17).

21. Dispositif selon l'une des revendications 4 à 10, caractérisé en ce que ladite partie (12) en matériau flexible constitue l'ensemble de l'écran (10) et est fixée au niveau de sa périphérie extérieure sur la jupe (2).

22. Dispositif selon la revendication 21, caractérisé en ce que ladite partie (12) en matériau flexible est également fixée sur le cadre inférieur (15) d'un châssis (20).

23. Dispositif selon l'une des revendications 21 ou 22, caractérisé en ce que l'écran (10) est composé de deux éléments annulaires reliés entre eux lors de leur montage.

24. Dispositif selon l'une quelconque des revendications 1 à 23 caractérisé en ce que ledit matériau perméable à la pression et flexible comprend au moins une couche de feutre (26) thermiquement isolant en fibres réfractaires placée entre au moins deux couches de tissu (27) dont l'une au moins est réalisée en un tissu ignifuge et/ou réfractaire.

25. Dispositif selon la revendication 24, caractérisé en ce que lesdites couches de feutre (26) et de tissu (27) sont juxtaposées.

26. Dispositif selon la revendication 24, caractérisé en ce que lesdites couches de feutre (26) et de tissu (27) sont maintenues entre elles par tout moyen de liaison approprié tel que des coutures (28), des agrafes ou des points piqués.

27. Dispositif selon la revendication 26, caractérisé en ce que lesdits moyens de liaison (28) sont disposés selon au moins une direction de façon à obtenir un matelassage.

28. Dispositif selon la revendication 27, caractérisé en ce que lesdits moyens de liaison (28) sont disposés selon deux directions perpendiculaires.

29. Dispositif selon l'une des revendications 24 à 28, caractérisé en ce que le tissu est constitué de fibres identiques à celles composant ledit feutre isolant.

30. Dispositif selon l'une des revendications 24 à 28, caractérisé en ce que le tissu est constitué de fibres de nature différente de celles composant ledit feutre isolant.

31. Dispositif selon l'une quelconque des revendications 1 à 23 caractérisé en ce que ledit matériau perméable à la pression et flexible comprend un tissu ou un treillis métallique souple recouvert de fibres ou de tissus réfractaires.

## Patentansprüche

1. Vorrichtung mit einem ersten und einem zweiten Bereich (13, 14), die zwischen wenigstens einem ersten und einem zweiten Element (2, 3) angeordnet sind, die einander im wesentlichen gegenüberliegen und sich von einander entfernen und relativ zueinander gleiten können, wobei der zweite Bereich (14) relativ plötzlichen und hohen Temperatur- und Druckschwankungen ausgesetzt sein kann, und mit einem thermisch isolierenden Schirm (10), der zwischen den beiden Bereichen angeordnet ist und wenigstens eine Verbindungsstelle (8, 7) mit den beiden Elementen (2, 3) besitzt, dadurch gekennzeichnet, daß wenigstens ein Teil (12) des Schirmes aus einem für den Druck durchdringbaren, flexiblen Material verwirklicht ist, wobei der Schirm (10) eine Form aufweist, die der des ersten und des zweiten Elements angepaßt ist.

2. Vorrichtung nach Anspruch 1, dadurch gekennzeichnet, daß der zweite Bereich der Temperatur und dem Druck eines von einem Generator relativ heißen Gases abgegebenen Gases ausgesetzt ist.

3. Vorrichtung nach Anspruch 2, dadurch gekennzeichnet, daß das erste Element aus dem Generator heißen Gases besteht.

4. Vorrichtung nach einem der Ansprüche 1 bis 3, dadurch gekennzeichnet, daß die Bereiche (13, 14) am hinteren Teil des Triebwerks einer Rakete oder eines Flugkörpers angeordnet sind.

5. Vorrichtung nach Anspruch 4, dadurch gekennzeichnet, daß der Generator heißen Gases durch das Triebwerk und die Düse (3) der Rakete oder des Flugkörpers gebildet ist.

6. Vorrichtung nach einem der Ansprüche 4 und 5, dadurch gekennzeichnet, daß das zweite Element durch den Mantel (2) der Rakete oder des Flugkörpers gebildet ist.

7. Vorrichtung nach einem der Ansprüche 4 bis 6, dadurch gekennzeichnet, daß der erste Bereich (13) zudem zwischen dem Sockel (1) des Triebwerks und dem Schirm (10) angeordnet ist.

8. Vorrichtung nach einem der Ansprüche 4 bis 7, dadurch gekennzeichnet, daß der zweite Bereich (14) überdies zwischen dem Schirm (10) und dem Umgebungsbereich angeordnet ist.

9. Vorrichtung nach einem der Ansprüche 4 bis 8, dadurch gekennzeichnet, daß der Schirm (10) im wesentlichen ringförmig ist, wobei sein Außenumfang (8) einen Bereich zur Befestigung an dem Mantel (2) bildet, während sein Innenumfang (7) einen Bereich zur Befestigung an der Düse (3) bildet.

10. Vorrichtung nach einem der Ansprüche 4 bis 9, dadurch gekennzeichnet, daß der Teil (12) aus flexiblem Material an der Düse (3) auf dem Niveau seines Innenumfangs (7) befestigt ist.

11. Vorrichtung nach einem der Ansprüche 4 bis 10, dadurch gekennzeichnet, daß der Schirm (10) überdies einen weiteren Teil (11) enthält, dessen Außenumfang (8) an dem Mantel (2) befestigt ist.

12. Vorrichtung nach Anspruch 11, dadurch gekennzeichnet, daß der Teil (11) durch ein thermisch isolierendes und steifes Material gebildet ist.

13. Vorrichtung nach Anspruch 11, dadurch gekennzeichnet, daß der Teil (11) durch ein thermisch isolierendes Material (23) und einen tragenden Aufbau (22, 24) gebildet ist.

14. Vorrichtung nach einem der Ansprüche 12 oder 13, dadurch gekennzeichnet, daß das thermisch isolierende Material von dem Druck durchdringbar ist.

15. Vorrichtung nach einem der Ansprüche 13 oder 14, dadurch gekennzeichnet, daß der tragende Aufbau (22, 24) an einem Chassis (20) abgestützt ist.

16. Vorrichtung nach Anspruch 15, dadurch gekennzeichnet, daß das Chassis (20) aus um die Düse (3) verteilten Armen (19) zusammengesetzt ist, die mittels eines oberen Rahmens (16) und eines unteren Rahmens (15) untereinander verbunden sind, wobei der obere Rahmen an dem Mantel (2) befestigt ist, während der untere Rahmen den tragenden Aufbau abstützt.

17. Vorrichtung nach einem der Ansprüche 13 bis 16, dadurch gekennzeichnet, daß der tragende Aufbau durch bearbeitete oder geformte Träger (22) gebildet ist.

18. Vorrichtung nach einem der Ansprüche 13 bis 16, dadurch gekennzeichnet, daß der tragende Aufbau durch eine konische Platte (24) aus einer Wabenform gebildet ist.

19. Vorrichtung nach Anspruch 18, dadurch gekennzeichnet, daß die Platte Öffnungen (25) enthält.

20. Vorrichtung nach einem der Ansprüche 11 bis 19, dadurch gekennzeichnet, daß der Teil (12) aus flexiblem Material an dem unteren Rahmen (15) auf dem Niveaus eines Außenumfangs (17) befestigt ist.

21. Vorrichtung nach einem der Ansprüche 4 bis 10, dadurch gekennzeichnet, daß der Teil (12) aus flexiblem Material den gesamten Schirm (10) bildet und auf dem Niveau seines Außenumfangs an dem Mantel (2) befestigt ist.

22. Vorrichtung nach Anspruch 21, dadurch gekennzeichnet, daß der Teil (12) aus flexiblem Material auch an dem unteren Rahmen (15) eines Chassis (20) befestigt ist.

23. Vorrichtung nach einem der Ansprüche 21 oder 22, dadurch gekennzeichnet, daß der Rahmen (10) aus zwei ringförmigen Elementen zusammengesetzt ist, die während ihrer Montage miteinander verbunden werden.

24. Vorrichtung nach einem der Ansprüche 21 bis 23, dadurch gekennzeichnet, daß das von dem Druck durchdringbare, flexible Material wenigstens eine thermisch isolierende Filzschicht (26) aus hitzebeständigen Fasern enthält, die zwischen wenigstens zwei Stoffschichten (27) angeordnet ist, von denen wenigstens eine aus einem feuerfesten und/oder hitzebeständigen Stoff verwirklicht ist.

25. Vorrichtung nach Anspruch 24, dadurch gekennzeichnet, daß die Filzschicht (26) und die Stoffschichten (27) nebeneinanderliegen.

26. Vorrichtung nach Anspruch 24, dadurch gekennzeichnet, daß die Filzschicht (26) und die Stoffschichten (27) untereinander durch irgendein geeignetes Verbindungsmittel wie Säume (28), Klammern oder Steppstichstellen zusammengehalten werden.

27. Vorrichtung nach Anspruch 26, dadurch gekennzeichnet, daß die Verbindungsmittel (28) derart entlang wenigstens einer Richtung vorgesehen sind, daß eine Polsterung erhalten wird.

28. Vorrichtung nach Anspruch 27, dadurch gekennzeichnet, daß die Verbindungsmittel (28) entlang zweier Richtungen vorgesehen sind, die zueinander senkrecht sind.

29. Vorrichtung nach einem der Ansprüche 24 bis 28, dadurch gekennzeichnet, daß der Stoff aus Fasern gebildet ist, die gleich jenen sind, die den isolierenden Filz bilden.

30. Vorrichtung nach einem der Ansprüche 24 bis 28, dadurch gekennzeichnet, daß der Stoff aus Naturfasern gebildet ist, die sich von jenen unterscheiden, die den isolierenden Filz bilden.

31. Vorrichtung nach einem der Ansprüche 1 bis 23, dadurch gekennzeichnet, daß das von dem Druck durchdringbare flexible Material einen Stoff oder ein biegsames Metallgitter enthält, das von hitzebeständigen Fasern oder Stoffen bedeckt ist.

## Claims

1. A device comprising a first and a second zone (13, 14) situated between at least one first and one second element (2, 3) which are substantially opposite and capable of moving away from one another and of sliding in relation to one another, it being possible for the second zone to be subjected to relatively sudden and large variations of temperature and pressure, and a thermally insulating screen (10) disposed between the two zones and exhibiting at least one point of fastening (8, 7) on each one of said elements (2, 3), characterized in that at least a part (12) of said screen is constructed of a material which is pressure-permeable and flexible, said screen (10) exhibiting a form which is adapted to the one of the first and second elements.

2. Device as claimed in claim 1, wherein said second zone is subjected to the temperature and to the pressure of gazes emanating from a generator of relatively hot gases.

3. Device as claimed in claim 2, wherein said first element is constituted by said hot-gas generator.

4. Device as claimed in one of claims 1 to 3, wherein said zones (13, 14) are situated to the rear of the propulsion unit of a rocket or of a missile.

5. Device as claimed in claim 4, wherein said hot-gas generator is constituted by the propulsion unit and the nozzle (3) of the rocket or of the missile.

6. Device as claimed in one of claim 4 or 5, wherein said second element is constituted by the skirt (2) of the rocket or of the missile.

7. Device as claimed in one of claims 4 to 6, wherein said first zone (13) is further situated between the case (1) of the propulsion unit and the screen (10).

8. Device as claimed in one of claims 4 to 7, wherein said second zone (14) is further situated between the screen (10) and the ambient environment.

9. Device as claimed in one of claims 4 to 8, wherein said screen (10) is substantially annular, its external periphery (8) constituting a zone of fastening on the skirt (2), while its internal periphery (7) consitutes a zone of fastening on the nozzle (3).

10. Device as claimed in one of claims 4 to 9, wherein said part (12) constructed of flexible material is fixed on the nozzle (3) near its internal periphry (7).

11. Device as claimed in one of claims 4 to 10, wherein said screen (10) further comprises another part (11), the external periphery (8) of which is fixed on the skirt (2).

12. Device as claimed in claim 11, wherein said part (11) is constituted of a thermally insulating and rigid material.

13. Device as claimed in claim 11, wherein said part (11) is constituted of a thermally insulating material (23) and of a carrying structure (22, 24).

14. Device as claimed in one of claims 12 or 13, wherein said thermally insulating material is pressure-permeable.

15. Device as claimed in one of claims 13 or 14, wherein the carrying structure (22, 24) is supported by a frame (20).

16. Device as claimed in claim 15, wherein said frame (20) is composed of arms (19) distributed about the nozzle (3) and connected to one another via an upper frame member (16) and a lower frame member (15), the upper frame member being fixed to the skirt (2), while the lower frame member supports the carrying structure.

17. Device as claimed in one of claims 13 to 16, wherein the carrying structure is constituted by machined or molded supports (22).

18. Device as claimed in one of claims 13 to 16, wherein the carrying structure is constituted by a honeycomb conical plate (24).

19. Device as claimed in claim 18, wherein said plate comprises openings (25).

20. Device as claimed in one of claims 11 to 19, wherein said part (12) constructed of flexible material is fixed to the lower frame member (15) near its external periphery (17).

21. Device as claimed in one of claims 4 to 10, wherein said part (12) constructed of flexible material constitutes the entire screen (10) and is fixed near its external periphery on the skirt (2).

22. Device as claimed in claim 21, wherein said part (12) constructed of flexible material is likewise fixed on the lower frame member (15) of a frame (20).

23. Device as claimed in one of claims 21 or 22, wherein the screen (10) is composed of two annular elements which are connected to one another in the course of their mounting.

24. Device as claimed in one of claims 1 to 23, wherein the said pressure-permeable and flexible material, comprises at least one layer of thermally insulting felt (26) in refractory fibers, which is placed between at least two layers of fabric (27), at least one of which is constructed of a flame-retardant and/or refractory fabric.

25. Device as claimed in claim 24, wherein said layers of felt (26) and of fabric (27) are juxtaposed.

26. Device as claimed in claim 24, wherein said layers of felt (26) and of fabric (27) are retained in relation to one another by any appropriate linkage means such as sewings (28), staples or back stitches.

27. Device as claimed in claim 26, wherein said linkage means (28) are disposed along at least one direction in such a manner as to obtain a cushioning.

28. Device as claimed in claim 27, wherein said linkage means (28) are disposed along two perpendicular directions.

29. Device as claimed in one of claims 24 to 28, wherein the fabric is constituted of fibers identical with those making up said insulating felt.

30. Device as claimed in one of claims 24 to 28, wherein the fabric is constituted of fibers of a different nature form that making up said insulating felt.

31. Device as claimed in one of claims 1 to 23 wherein the said pressure-permeable and flexible material comprises a flexible metal lattice or fabric covered with refractory fabrics or fibers.
